# EUROPEAN PATENT SPECIFICATION

(11) **EP 1 839 370 B1**
(45) Date of publication and mention of the grant of the patent: **24.04.2013**
(21) Application number: 06709565.3
(22) Date of filing: 20.01.2006
(51) Int. Cl.: H01Q 23/00, H01Q 21/28, H01Q 1/24

(54) **A TWO-MODULE INTEGRATED ANTENNA AND RADIO**
INTEGRIERTE ZWEIMODULANTENNE UND RADIO
ANTENNE ET RADIO INTEGREES A DEUX MODULES

(30) Priority: 20.01.2005 GB 0501170
(43) Date of publication of application: 03.10.2007
(73) Proprietor: ANTENOVA LIMITED, Stow-cum-Quy, Cambridge CB5 9AR (GB)
(72) Inventor: SAARIO, Seppo, Cambridge CB5 9AR (GB); IDE, Jonathan, Cambridge CB5 9AR (GB); KINGSLEY, Simon, Philip, Cambridge CB5 9AR (GB)
(74) Representative: Harrison Goddard Foote
(86) International application number: PCT/GB2006/000213
(87) International publication number: WO 2006/077430

(56) References cited:
- EP-A- 1 137 099
- US-A1- 2001 006 902
- US-A1- 2001 008 839
- US-A1- 2003 063 030
- US-A1- 2003 189 519

## Description

The present invention relates to a two-module integrated antenna and radio. It applies to all types of antennas and is not restricted to PIFAs (planar inverted-F antennas), monopoles, dipoles, dielectric antennas and the like. It applies to various applications, but is particularly though not exclusively, concerned with mobile phone handsets, personal digital assistants (PDAs) and laptop computers.

### BACKGROUND

The design of internal antennas for small modern communication devices is well known to be a difficult problem.

Firstly, there are many different types of platforms, especially for handsets where clamshell designs, bar phones, flip phones, slider and swing phone designs are all common. For example, the connections between the two parts of segmented phones can have a large impact on the antenna performance.

Secondly, modern communication devices are getting smaller and at the same time the antenna is being asked to cover more bands.

Thirdly, other radios and other antennas may be present for applications such GPS, Bluetooth®, digital media broadcasting, etc. and this can cause coupling and co-sited transmitter problems.

Finally, there is an increasing call for multiple radio antennas in a single unit for diversity or MIMO (multiple input, multiple output) applications.

While all these factors lead to an increase in the complexity of the antenna, commercial pressures require the antenna to be ever cheaper and to occupy less volume in the handset. With the bill of materials already pared to a minimum, larger scale integration of components is seen as the way forward to further cost reductions. One way to address all these issues is to consider the antenna and RF (radio frequency) front-end together as a single unit thus creating a radio-antenna unit. Such a radio-antenna unit could exploit different radio architectures such as balanced RF and antenna structures, impedances other than 50 ohms, etc.

The present applicant has thus become interested not just in antennas but the whole of the process of converting electrical signals into radio waves and vice versa. The ultimate objective is to design a single module that will incorporate the antenna and all the radio components for cellular radio or WLAN applications. In order to drive the antenna from conventional cellular or WLAN radio transceivers, it may be necessary to incorporate discrete ICs (integrated circuits) from third party manufacturers. An example of such a discrete component is a chip balun that is needed when a balanced dipole-like antenna is driven from a single ended unbalanced source such as a power amplifier (PA).

It is envisaged by the present applicant that some of the functionality of these ICs will ultimately be built directly into the antenna. Duplexers and filters, for example, could be fabricated as part of the lower layers of a multi-layer antenna structure, rather than being separate components integrated into the module. An alternative approach would be to adapt PAs and other radio components such that the necessary balanced and filtered outputs are produced. This ultimate radio module, containing a special purpose antenna and specially adapted radio components, would remove the need for mobile phone handset manufacturers to be radio experts as they would effectively have a device with a digital input/output and everything else would be taken care of by the module.

Most existing mobile phone handsets, PDAs and laptop computer antennas are unbalanced designs such as PIFAs and monopoles. These are small and make effective use of the PCB (printed circuit board) or PWB (printed wiring board) as part of the antenna, but they need extensive customisation for every product because every PCB/PWB is a different shape and size. Antenna customisation is an expensive process that forms a significant part of the cost of a device and precludes the use of integrated radio-antenna modules, as the cost of customizing these would be prohibitive.

Progress towards integrated antennas could be made by the introduction of balanced antennas that do not make use of the PCB or PWB and so require less customisation. Unfortunately, balanced antennas are often twice the size of their unbalanced counterparts and also have less bandwidth because they are not using a wide PCB or PWB as part of the radiating structure. A further complication is that many types of balanced antenna (dipoles, spiral pairs, etc.) are adversely affected by self-induced image currents when they are placed electrically close to a groundplane. Modern handsets, PDAs and laptop computers have a full groundplane and the antenna is located less than 1/50 of a free-space wavelength above the groundplane. To circumvent this problem, the present applicant has developed a number of new types of balanced antenna that are small enough for use in a handset, etc. and will work over the top of a fully populated PCB groundplane. These inventions are the subject of a separate patent application (UK patent application No 0501938.5).

Although the module concept applies to both balanced (dipole-like) antennas and unbalanced (monopole-like) designs, the present invention is particularly concerned with balanced designs as these have an inherent independence of the groundplane. Moreover, balanced designs generally reduce customisation costs and make radio-antenna modules commercially viable. Balanced designs may also be implemented as the same module in many different types of handsets, laptops, etc.

Modular radio-antenna devices are known, for example, from US 2003/063030 and US 2001/006902 and US 2003/189519.

### BRIEF SUMMARY OF THE DISCLOSURE

According to a first aspect of the present invention, there is provided a modular radio-antenna device comprising first and second separable modules, the first module containing all radio and radio-frequency front-end components of the device and a first antenna component, and the second module containing at least a second antenna component of the device, the first and second modules being provided with means for physical and electrical interconnection with each other; wherein the first module comprises a printed circuit board (PCB) or printed wiring board (PWB) bearing the front-end components, a first dielectric casing forming a perimetral surround for the PCB or PWB, and a low-band unbalanced antenna mounted in the dielectric casing spaced from the PCB or PWB, and wherein the second module comprises a second dielectric casing provided with means for attachment to the first dielectric casing, and a high-band balanced antenna mounted in the second dielectric casing.

In some embodiments, an additional antenna component (for example a low band unbalanced monopole antenna) may be located remote from the first and second modules, but electrically connected to the first module.

In some embodiments, the second module may be larger than the first module, at least in a plane defined by the PCB or PWB when the device is mounted thereon. This can be advantageous in that the second module, containing the antenna, can be larger than the first module, containing the front-end components, and thus still have good performance while not taking up too large a footprint or too much real-estate on the PCB or PWB.

By designing a radio-antenna device in two modular parts, the work of creating, manufacturing and testing the radio-antenna device is much simplified. In a first embodiment, the lower module incorporates all the radio and RF front-end components (power amplifiers, RF switches, filters, diplexers, duplexers, etc.) whilst the upper module contains all the antenna structure. The upper module might well be larger in area than the lower, see figure below, but raising it up like this enables it to have good performance without taking up too much PCB real estate.

The first antenna component is a low band antenna and the second antenna component is a high band antenna. It will be understood that "low band" and "high band" in this context are mutually relative terms, in other words, the first antenna component is configured to operate in a frequency band lower than that in which the second antenna component is configured to operate. This is of particular interest for cellular radio handsets because the first, low band antenna (e.g. 800/900MHz) must generally be unbalanced since the wavelength is so long that the whole of a PCB or PWB on which the device is mounted when in operation is needed as the primary radiator.

The first antenna component on its own (i.e. without the PCB or PWB groundplane) would generally be inside the Chu-Harrington limit [L. J. Chu, "Physical Limitations of Omni-Directional Antennas," Journal of Applied Physics, Vol. 19, pp. 1163-1175, 1948], [R.C. Hansen, "Fundamental Limitations in Antennas," Proceedings of the IEEE, Vol. 69, No. 2, pp. 170-182, 1981]. An antenna inside the Chu-Harrington limit would be an inefficient radiator, lack sufficient bandwidth or both. No such restriction applies in the high band (e.g. 1800/1900MHz), and here a balanced antenna has advantages for reasons already given. The requirement is thus for an antenna that is balanced in one band and unbalanced in another.

In one exemplary embodiment, the first module includes a simple, low-band unbalanced PIFA together with the front-end components, while the second module contains a more complex high band, balanced (possibly dual- or multi-band) antenna structure. It is advantageous for the low-band, unbalanced antenna to be in the first module proximate to the groundplane on the PCB or PWB, since such an unbalanced antenna needs to be close to the groundplane so as to drive this effectively during operation.

In a further embodiment an electromagnetic shield may be formed inside or outside the first module as an integral part of the module so as to reduce electromagnetic screening problems and the need for separate conductive screening shields around the radio modules.

In terms of physical structure, the first module may be of a plastics construction, a ceramics construction such as an LTCC (low-temperature co-fired ceramic) structure, a PCB structure or a flex circuit fixed to a plastic carrier.

The second module may also be made in any of these ways, but there is no requirement for the first and the second modules to have the same structure and it may be advantageous for their structures and materials to be different.

As an example, the first module may be a PCB or PWB daughter board reflowed onto a main (e.g. handset) PCB or PWB and the second module may be a metallised plastic structure or a flex circuit fixed to a plastic carrier. The second module may be attached to the first module by a number of techniques including snap fitting, heat stakes, interference fit, soldering, glass frit, metallisation as bonding, other gluing processes and or including diffusion, or melt process, etc. This list of attachment processes is not exhaustive.

In general, it is particularly preferred for the first and second modules to have mutually complementary physical and electronic connection or attachment means, for example first and second outer casings that are adapted for mutual interconnection or attachment.

It is envisaged that embodiments of the present invention will:
1. Lower the overall design costs for devices such as a handsets, PDAs and laptop computers.
2. Speed up the development time for handsets and laptops, thereby reducing the time-to-market.
3. Effectively reduce the area of PCB occupied by the antenna by allowing other components to share the same space.
4. Improve efficiency in the high band due to lower chassis currents and the reduction of antenna loading due to the user.
5. Reduce the losses between the power amplifier, front-end module and antenna, thereby improving efficiency. Loss reduction can arise from both better matching of components and closer physical locating.
6. Allow complete radio EM shields to be formed inside the lower module to reduce electromagnetic screening problems and the need for separate conductive screening shields around the radio modules.
7. Increase the complexity that can be used in the antenna design through the use of specially adapted radio front-end components. This can be used to improve performance.
8. Allow the antenna and radio performance to be optimised as a pair (for example, using impedances other than 50 ohms).

Advantages of the two-module approach to an integrated antenna module may be summarised as:
1. **Testing:** The base unit can be tested after reflow onto main board, and the antenna can be tested before assembly onto the base unit.
2. **Development:** It is much easier to develop RF circuits with a conducted connection as opposed to a radiated connection, which would always require a coupler.
3. **Staff:** RF engineers can work on the base unit while antenna engineers work on the upper unit. It is only necessary to agree interface specifications between the two.
4. **Timescale:** Work on the two modules can proceed in parallel to speed up development.
5. **Technology choice:** The base unit can be made of one technology (e.g. LTCC) and the upper module from a different one (e.g. plastic). This maximises technology and cost advantages for both components since requirements are quite different.
6. **Applications choice:** Different antenna modules can be used with the same base unit and vice versa. An example might be where a single base unit is used but a tall antenna (e.g. total height 7mm) is used in one handset to get quadband performance and a less tall one (e.g. 5mm height) might be used where triband performance is acceptable.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### BRIEF DESCRIPTION OF THE DRAWINGS

For a better understanding of the present invention and to show how it may be carried into effect, reference shall now be made by way of example to the accompanying drawings, in which:
FIGURE 1 shows an example not being part of the present invention in schematic form;
FIGURE 2 shows an exploded view of a specific embodiment of the invention; and
FIGURE 3 shows the S₁₁ return loss plot for the embodiment of Figure 2.

### DETAILED DESCRIPTION

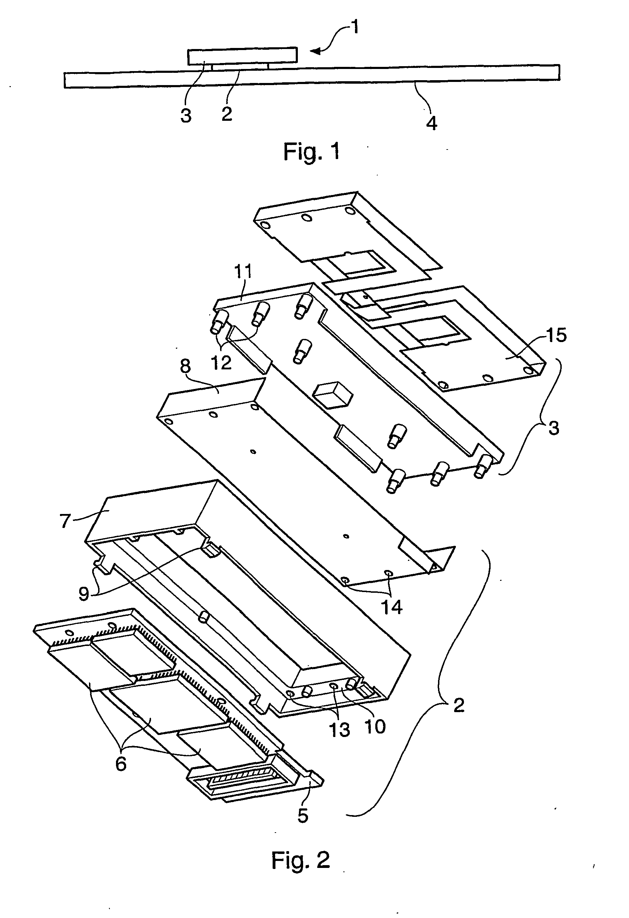

Figure 1 shows an example not being part of the present invention in schematic form. A radio-antenna device 1 comprising a first, lower module 2 and a second, upper module 3 is mounted on a PCB 4 including a conductive groundplane (not shown). The first module 2 incorporates all the radio and RF front-end components (power amplifiers, RF switches, filters, diplexers, duplexers, etc.) (not shown), while the second module 3 incorporates the antenna components (not shown). The two modules 2, 3 and manufactured as separate units, and are provided with complementary physical and electronic connection means so that they can be fitted together in a quick and simple manner. In the embodiment shown, the upper module 3 has a greater area parallel to the PCB 4 than the lower module 2. This allows a larger antenna component to be used (thus enabling improved performance) without taking up additional real-estate or a larger footprint on the PCB 4 than already taken up by the smaller lower module 2.
Figure 2 shows a detailed embodiment of the present invention in exploded form. There is shown a first, lower module indicated generally at 2, and a second, upper module indicated generally at 3.

The first module 2 comprises a PCB daughter board 5 bearing various radio and RF front-end components 6, a dielectric casing 7 adapted to fit about a perimeter of the PCB daughter board 5, and a low-band unbalanced PIFA 8 adapted to fit into the casing 7 above the daughter board 5. The casing 7 includes feet 9 adapted to clip into apertures (not shown) in a parent PCB 4 (not shown in Figure 2). The casing 7 also includes an internal flange 10 that serves to support the PIFA 8 and to help keep the daughter board 5 securely in place on the parent PCB 4.

The second module 3 comprises a dielectric casing 11 provided with feet 12 adapted to connect to complementary fixing holes 13 in the flange 10 of the dielectric casing 7 by way of holes 14 in the PIFA 8. Finally, a high band balanced antenna 15 is fitted into the casing 11.

Electronic connections (not shown) are provided for connecting the antennas 8 and 15 to the radio components 6.

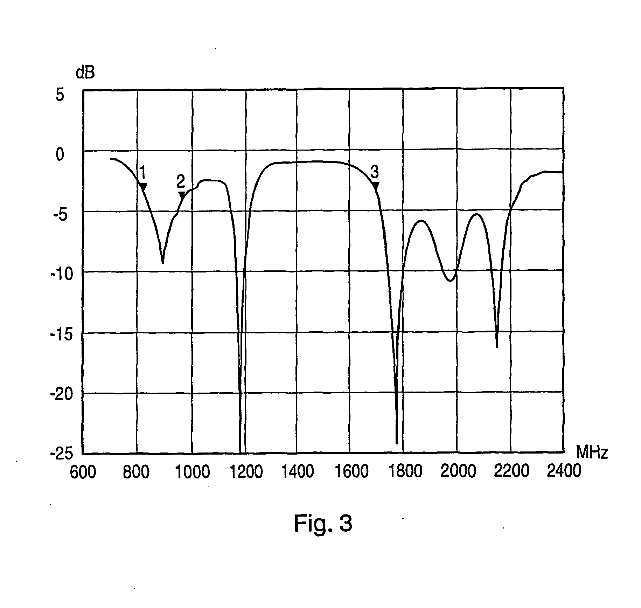

Figure 3 shows the S₁₁ return loss plot for the radio-antenna device of Figure 2. Good bandwidth is evident in both low and high bands.

## Claims

1. A modular radio-antenna device (1) comprising first (2) and second (3) separable modules, the first module (2) containing all radio and radio-frequency front-end components (6) of the device (1) and a first antenna component (8), and the second module (3) containing at least a second antenna component (15) of the device (1), the first (2) and second (3) modules being provided with means for physical (12, 13) and electrical interconnection with each other; wherein the first module (2) comprises a printed circuit board (PCB) or printed wiring board (PWB) (5) bearing the front-end components (6), a first dielectric casing (7) forming a perimetral surround for the PCB or PWB (5), and a low-band unbalanced antenna (8) mounted in the dielectric casing (7) spaced from the PCB or PWB (5), and wherein the second module (3) comprises a second dielectric casing (11) provided with means (12) for attachment to the first dielectric casing (7), and a high-band balanced antenna (15) mounted in the second dielectric casing (7).

2. A device (1) as claimed in claim 1, wherein the front-end components (6) in the first module (2) are provided with electromagnetic shielding.

3. A device (1) as claimed in any preceding claim, wherein the second module (3) extends over a greater area than the first module (2).

4. A device (1) as claimed in any preceding claim, wherein the dielectric casing (7) of the first module (2) includes means for attachment (9) to the printed circuit board or printed wiring board (5).

5. A device (1) as claimed in any preceding claim, wherein the dielectric casings (7, 11) are made of a plastics or ceramics material.

6. A device (1) as claimed in claim 5, wherein the dielectric casings (7, 11) are of plastics construction, a ceramics construction such as an LTCC (low-temperature co-fired ceramic) structure, a PCB structure or a flex circuit fixed to a plastic carrier.

7. A device (1) as claimed in claim 5 or 6, wherein the casing (7) of the first module (2) comprises a different material than the casing (11) of the second module (3).

## Patentansprüche

1. Modulare Funk-Antennen-Vorrichtung (1), die erste (2) und zweite (3) trennbare Module umfasst, wobei das erste Modul (2) alle Funk- und Funkfrequenz-Empfangsteilkomponenten (6) der Vorrichtung (1) und eine erste Antennenkomponente (8) aufweist, und wobei das zweite Modul (3) mindestens eine zweite Antennenkomponente (15) der Vorrichtung (1) aufweist, wobei die ersten (2) und zweiten (3) Module mit Einrichtungen für eine physische (12, 13) und elektrische Verbindung miteinander versehen sind; wobei das erste Modul (2) eine gedruckte Leiterplatte (PCB) oder eine gedruckte Leiterplatine (PWB) (5) umfasst, welche die Empfangsteilkomponenten (6) trägt, wobei ein erstes dielektrisches Gehäuse (7) eine perimetrale Einfassung für die PCB oder die PWB (5) bildet, und wobei eine unsymmetrische Low-Band-Antenne (8) in dem dielektrischen Gehäuse (7) mit Abstand zu der PCB oder PWB (5) angebracht ist, und wobei das zweite Modul (3) ein zweites dielektrisches Gehäuse (11) umfasst, das mit Einrichtungen (12) zur Anbringung an dem ersten dielektrischen Gehäuse (7) versehen ist, und wobei eine symmetrische High-Band-Antenne (15) in dem zweiten dielektrischen Gehäuse (7) angebracht ist.

2. Vorrichtung (1) nach Anspruch 1, wobei die Empfangsteilkomponenten (6) in dem ersten Modul (2) mit einer elektromagnetischen Abschirmung versehen sind.

3. Vorrichtung (1) nach einem der vorstehenden Ansprüche, wobei sich das zweite Modul (3) über eine größere Fläche erstreckt als das erste Modul (2).

4. Vorrichtung (1) nach einem der vorstehenden Ansprüche, wobei das dielektrische Gehäuse (7) des ersten Moduls (2) eine Einrichtung zur Anbringung (9) an der gedruckten Leiterplatte oder der gedruckten Leiterplatine (5) aufweist.

5. Vorrichtung (1) nach einem der vorstehenden Ansprüche, wobei die dielektrischen Gehäuse (7, 11) aus einem Kunststoff oder einem Keramikwerkstoff bestehen.

6. Vorrichtung (1) nach Anspruch 5, wobei die dielektrischen Gehäuse (7, 11) eine Kunststoffkonstruktion, eine Keramikkonstruktion wie etwa eine Konstruktion aus LTCC (Low-Temperature Co-fired Ceramic bzw. Niedertemperatur-Einbrand-Keramik), eine PCB-Struktur oder eine an einem Kunststoffträger angebrachte Flex-Schaltung aufweist.

7. Vorrichtung (1) nach Anspruch 5 oder 6, wobei das Gehäuse (7) des ersten Moduls (2) ein anderes Material aufweist als das Gehäuse (11) des zweiten Moduls (3).

## Revendications

1. Dispositif radio-antenne modulaire (1) comprenant un premier (2) et un second (3) modules séparables, le premier module (2) contenant tous les composants frontaux radio et radiofréquence (6) du dispositif (1) et un premier composant d'antenne (8), et le second module (3) contenant au moins un second composant d'antenne (15) du dispositif (1), les premier (2) et second (3) modules étant pourvus de moyens pour l'interconnexion physique (12, 13) et électrique l'un avec l'autre ; dans lequel le premier module (2) comprend une carte de circuit imprimé (en anglais « Printed Circuit Board » - PCB) ou une carte de câblage imprimé (en anglais « Printed Wiring Board » - PWB) (5) portant les composants frontaux (6), un premier boîtier diélectrique (7) formant un entourage périphérique pour la PCB ou la PWB (5), et une antenne non compensée à bande basse (8) montée dans le boîtier diélectrique (7) espacée de la PCB ou de la PWB (5), et dans lequel le second module (3) comprend un second boîtier diélectrique (11) pourvu de moyens (12) pour une fixation au premier boîtier diélectrique (7), et une antenne compensée à bande haute (15) montée dans le second boîtier diélectrique (7).

2. Dispositif (1) selon la revendication 1, dans lequel les composants frontaux (6) dans le premier module (2) sont pourvus d'un blindage électromagnétique.

3. Dispositif (1) selon l'une quelconque des revendications précédentes, dans lequel le second module (3) s'étend sur une surface plus grande que le premier module (2).

4. Dispositif (1) selon l'une quelconque des revendications précédentes, dans lequel le boîtier diélectrique (7) du premier module (2) comprend des moyens de fixation (9) à la carte de circuit imprimé ou carte de câblage imprimé (5).

5. Dispositif (1) selon l'une quelconque des revendications précédentes, dans lequel les boîtiers diélectriques (7, 11) sont faits en une matière plastique ou céramique.

6. Dispositif (1) selon la revendication 5, dans lequel les boîtiers diélectriques (7, 11) sont d'une construction plastique, d'une construction céramique comme une structure LTCC (en anglais « low-temperature co-fired ceramic » - céramique cocuite à basse température), une structure PCB ou un circuit flexible fixé sur un support en matière plastique.

7. Dispositif (1) suivant la revendication 5 ou 6, dans lequel le boîtier (7) du premier module comprend un matériau différent du boîtier (11) du second module (3).
